# EUROPÄISCHE PATENTSCHRIFT

(11) **EP 1 024 955 B1**
(45) Veröffentlichungstag und Bekanntmachung des Hinweises auf die Patenterteilung: **14.08.2013**
(21) Anmeldenummer: 98954367.3
(22) Anmeldetag: 07.10.1998
(51) Int. Cl.: B32B 27/40, B32B 27/20, C08K 3/00

(54) **VERBUNDE AUS POLYURETHAN UND EINEM EIN ANORGANISCHES POLARES ADDITIV ENTHALTENDEN THERMOPLASTISCHEN MATERIAL**
COMPOSITES CONSISTING OF POLYURETHANE AND A THERMOPLASTIC MATERIAL CONTAINING AN INORGANIC POLAR ADDITIVE
COMPOSITES A BASE DE POLYURETHANE ET D'UN MATERIAU THERMOPLASTIQUE CONTENANT UN ADDITIF POLAIRE INORGANIQUE

(30) Priorität: 20.10.1997 DE 19746265
(43) Veröffentlichungstag der Anmeldung: 09.08.2000
(73) Patentinhaber: Bayer Intellectual Property GmbH, 40789 Monheim (DE)
(72) Erfinder: WITTMANN, Dieter, D-51375 Leverkusen (DE); ECKEL, Thomas, D-41540 Dormagen (DE); KELLER, Bernd, D-47608 Geldern (DE); RASCHILAS, Wolfgang, D-58515 Lüdenscheid (DE)
(74) Vertreter: BIP Patents
(86) Internationale Anmeldenummer: PCT/EP1998/006373
(87) Internationale Veröffentlichungsnummer: WO 1999/020464

(56) Entgegenhaltungen:
- EP-A- 0 212 559
- EP-A- 0 219 977
- WO-A-95/09200
- DATABASE WPI Section Ch, Week 9442 Derwent Publications Ltd., London, GB; Class A13, AN 94-337874 XP002095995 & JP 06 262714 A (DENKI KAGAKU KOGYO KK) , 20. September 1994
- DATABASE WPI Section Ch, Week 9442 Derwent Publications Ltd., London, GB; Class A13, AN 94-337873 XP002095996 & JP 06 262713 A (DENKI KAGAKU KOGYO KK) , 20. September 1994

## Beschreibung

Gegenstand der vorliegenden Erfindung sind Verbunde aus wenigstens 2 unterschiedlichen, unmittelbar miteinander verbundenen Kunststoffmaterialien, wovon ein Material aus wenigstens einem thermoplastischen Polymeren besteht, das polare Verbindungen von Metallen der 1. bis 5. Hauptgruppe oder der 1. bis 8. Nebengruppe des Periodensystems als feinstteiliges anorganisches Pulver enthält, und das andere Material aus Polyurethan ist.

Es ist bekannt, daß Verbunde aus einem thermoplastischen Material und einem Polyurethan, insbesondere einem Polyurethanschaummaterial keine ausreichende Verbundhaftung aufweisen. Da man in der Kfz-Industrie in zunehmendem Maße solche Verbundmaterialien einsetzen möchte, deren Verbundhaftung selbst extremen Temperaturschwankungen gewachsen ist, aber wegen den Recyclinganforderungen möglichst wenig unterschiedliche Materialien verwendet werden sollen, war es eine Aufgabe der vorliegenden Erfindung, die Verbundhaftung von unmittelbar miteinander verbundenen thermoplastischen Materialien mit Polyurethan ausreichend zu verbessern.

JP 6262714 A offenbart einen Verbund enthaltend als anorganische Verbindung TiO₂, wobei Teilchengrößen des TiO₂ nicht offenbart werden,

EP 0 219 977 A1 offenbart einen Verbund enthaltend als anorganische Verbindung Sb₂O₃, wobei ebenfalls keinerlei Teilchengröße des Sb₂O₃ offenbart wird.

EP 0 212 559 A2 offenbart einen Verbund enthaltend als anorganische Verbindung TiO₂, wobei Teilchengrößen des TiO₂ nicht offenbart werden

WO 95/09200 A1 offenbart einen Verbund, der als anorganische Verbindungen Füllstoffe enthalten kann, wobei ebenfalls kein Hinweis auf die Teilchengröße der Füllstoffe gegeben wird.

US 4.657.964 A offenbart wässrige Urethan-Zusammensetzungen, die gute Flammschutzeigenschaften aufweisen, wobei diesen Zusammensctzungen auch Antimonoxid zu gesetzt werden kann, was die Flammschutzeigenschaften weiter verbessert.

Die Aufgabe wird erfindungsgemäß durch Verbunde gelöst, die aus wenigstens zwei unterschiedlichen unmittelbar miteinander verbundenen Kunststoffmaterialien gemäß Anspruch 1 bestehen.

Die Verbund-Werkstoffe können in bekannter Weise hergestellt werden. Vorzugsweise wird das Verbundteil aus thermoplastischen Polymeren vorgefertigt und darauf das Polyurethanreaktionssystem aufgebracht und ausreagiert. Je nach Reaktivität der Polyurethanreaktionskomponenten können diese bereits vorgemischt sein oder während des Auftragens in bekannter Weise vermischt werden. Das Auftragen erfolgt vorzugsweise durch Sprühen, Rakeln oder Kalandrieren. Es ist aber auch möglich, die erfindungsgemäßen Verbunde durch Coextrusion nach bekannten Methoden herzustellen.

Als thermoplastische Materialien eignen sich alle bekannten Thermoplasten, vorzugsweise thermoplastische Polyolefine, Polycarbonate, Polyestercarbonate, Polyester, Styrolcopolymerisate, gegebenenfalls kautschukhaltige Pfropf-(Co)polymerisate wie ABS-Polymerisate, Polyamide und/oder deren thermoplastische Mischungen.

Vorzugsweise eignen sich folgende Polymere als thermoplastisches Material A:

Erfindungsgemäße Polyolefine sind Polymere von aliphatischen ungesättigten Kohlenwasserstoffen, wie beispielsweise Ethylen, Propylen, Butylen oder Isobutylen, die nach üblichen Verfahren, z.B. Radikalpolymerisation, erhalten werden und mittlere Gewichtsmittel-Molekulargewichte M̅_{W} (gemessen nach gelchromatographischen Methoden) zwischen 5 000 und 3 000 000 haben. Es ist sowohl Hochdruckpolyolefin als auch Niederdruckpolyolefin verwendbar. Die ungesättigten Kohlenwasserstoffe können auch mit anderen Vinylmonomeren wie z.B. Vinylacetat, Acrylsäure oder Acrylsäureester in bekannter Weise copolymerisiert sein, wobei der Anteil an Vinylmonomeren maximal 30 Gew.-%, vorzugsweise bis 25 Gew.-% beträgt.

Bevorzugt sind Polyethylen und Polypropylen.

Erfindungsgemäß geeignete thermoplastische Polymere sind auch thermoplastische, aromatische Polycarbonate, insbesondere solche auf Basis der Diphenole der Formel (I) 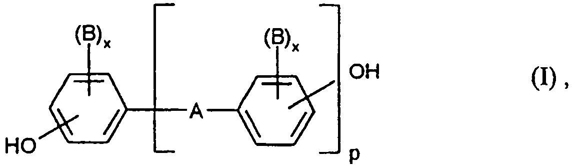 worin
- A: eine Einfachbindung, C₁-C₅-Alkylen, C₂-C₅-Alkyliden, C₅-C₆-Cycloalkyliden, -S-, -SO₂-, -O-, -CO- oder C₆-C₁₂-Arylen bedeutet, welches gegebenenfalls mit weiteren, Heteroatome enthaltenden aromatischen Ringen kondensiert sein kann,
- B: unabhängig voneinander, Halogen, bevorzugt Chlor, Brom, C₁-C₈-Alkyl, C₆-C₁₀-Aryl, bevorzugt Phenyl, C₇-C₁₂-Aralkyl, bevorzugt Benzyl,
- x: unabhängig voneinander, jeweils 0, 1 oder 2 und
- p: 1 oder 0 bedeuten,
oder alkylsubstituierte Dihydroxyphenylcycloalkane der Formel (II), 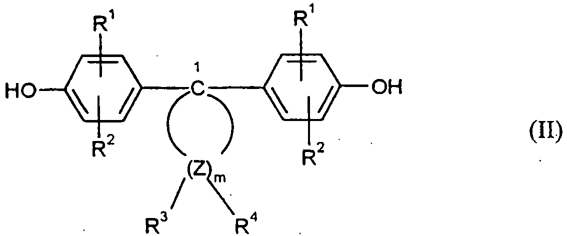 worin
- R¹ und R²,: unabhängig voneinander, Wasserstoff, Halogen, bevorzugt Chlor oder Brom, C₁-C₈-Alkyl, C₅-C₆-Cycloalkyl, C₆-C₁₀-Aryl, bevorzugt Phenyl und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes Z individuell wählbar, unabhängig voneinander, Wasserstoff oder C₁-C₆-Alkyl, vorzugsweise Wasserstoff, Methyl oder Ethyl
- und Z: Kohlenstoff bedeutet, mit der Maßgabe, daß an mindestens einem Atom Z R³ und R⁴ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring-C-Atomen im cycloaliphatischen Rest (m = 4 oder 5 in Formel (I)) wie beispielsweise die Diphenole der Formeln 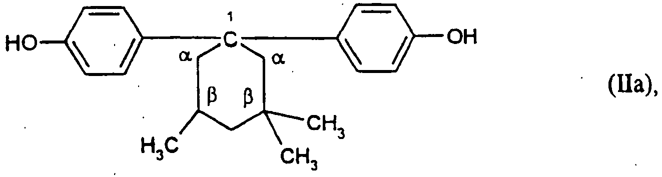 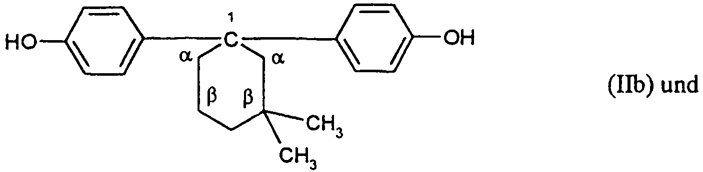 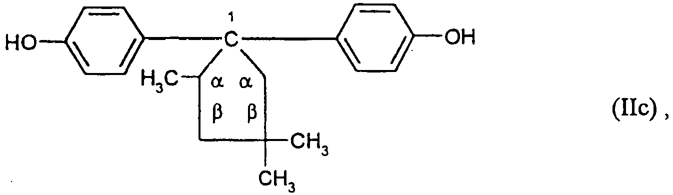 wobei das 1,1-Bis-(4-hydroxyphenyl)-3,3,5-trimethylcyclohexan (Formel (IIa) besonders bevorzugt ist.

Die erfindungsgemäß geeigneten Polycarbonate können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise
Phloroglucin,
4,6-Dimethyl-2,4,6-tri-(4-hydroxyphenyl-hepten-2,
4,6-Dimethyl-2,4,6-tri-(4-hydroxyphenyl-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester, Tetra-(4-hydroxyphenyl)-methan,
Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die mol-Summen an Diphenolen, an 2,2-Bis-(3,5-dibrom-4-hydroxyphenyl)-propan.

Die als Komponente A zum Einsatz kommenden aromatischen Polycarbonate können teilweise durch aromatische Polyestercarbonate ausgetauscht werden.

Aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 007 934).

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen. Weiterhin sind als thermoplastisches Material Styrol-(Co)polymerisate von einem oder wenigstens zwei ethylenisch ungesättigten Monomeren (Vinylmonomeren) geeignet, wie beispielsweise von Styrol, α-Methylstyrol, kernsubstituierten Styrolen, Acrylnitril, Methacrylnitril, Methylmethacrylat, Maleinsäureanhydrid, N-substituierte Maleinimide und (Meth)-Acrylsäurealkylester mit 1 bis 18 C-Atomen.

Die (Co)polymerisate sind harzartig, thermoplastisch und kautschukfrei.

Bevorzugte Styrol-(Co)polymerisate sind solche aus wenigstens einem Monomeren aus der Reihe Styrol, α-Methylstyrol und/oder kernsubstituiertem Styrol mit wenigstens einem Monomeren aus der Reihe Acrylnitril, Methacrylnitril, Methylmethacrylat, Maleinsäureanhydrid und/oder N-substituiertem Maleinimid.

Besonders bevorzugte Gewichtsverhältnisse im thermoplastischen Copolymerisat sind 60 bis 100 Gew.-% der Styrolmonomeren und 40 bis 0 Gew.-% der weiteren Vinylmonomeren.

Besonders bevorzugte (Co)polymerisate sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die (Co)polymerisate sind bekannt und lassen sich durch radikalische Polymerisation, insbesondere durch Emulsions-, Suspensions-, Lösungs- oder Massepolymerisation herstellen. Die (Co)polymerisate besitzen vorzugsweise Molekulargewichte M̅_{w} (Gewichtsmittel, ermittelt durch Lichtstreuung oder Sedimentation) zwischen 15 000 und 200 000.

Besonders bevorzugte (Co)polymerisate sind auch statistisch aufgebaute (Co)polymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie α-Methylstyrol, enthalten.

Die Molekulargewichte (Zahlenmittel M̅ₙ) Styrol-Maleinsäureanhydrid-Copolymeren können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Geeignet als thermoplastische Verbundmaterialien sind auch Pfropf-(Co)polymerisate. Diese umfassen Pfropf-(Co)polymerisate mit kautschukelastischen Eigenschaften, die im wesentlichen aus mindestens 2 der folgenden Monomeren erhältlich sind:

Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Pfropfpolymerisate sind partiell vernetzt und besitzen Gelgehalte von über 20 Gew.-%, vorzugsweise über 40 Gew.-%, insbesondere über 60 Gew.-%.

Bevorzugte Pfropf-(Co)polymerisate umfassen Pfropf-(Co)polymerisate C aus:
C.1 5 bis 95, vorzugsweise 30 bis 80 Gew.-Teilen einer Mischung aus
   C.1.1 50 bis 99 Gew.-Teilen Styrol, α-Methylstyrol, halogen- oder methylkernsubstituierten Styrolen, Methylmethacrylat oder Mischungen dieser Verbindungen und
   C.1.2 1 bis 50 Gew.-Teilen Acrylnitril, Methacrylnitril, Methylmethacrylat, Maleinsäureanhydrid, C₁-C₄-Alkyl- bzw. Phenyl-N-substituierten Maleinimiden oder Mischungen dieser Verbindungen,
C.2 5 bis 95, vorzugsweise 20 bis 70 Gew.-Teilen Polymerisat auf Dien- und/oder Alkylacrylat-Basis mit einer Glasübergangstemperatur < 10°C, vorzugsweise <-10°C.

Bevorzugte Pfropf-(Co)polymerisate sind z.B. mit Styrol und/oder Acrylnitril und/oder (Meth)-Acrylsäurealkylestern gepfropfte Grundlagen C.2 wie Polybutadiene, Butydien/Styrol-Copolymerisat und Acrylatkautschuke; d.h. (Co)polymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-(Co)polymerisate, Polyisobutene oder Polyisoprene, wie sie z.B. in der DE-OS 2 348 377 (= US-PS 3 919 353) beschrieben sind.

Besonders bevorzugte Polymerisate sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropf(Co)polymerisate sind erhältlich durch Pfropfreaktion von
- α: 10 bis 70, vorzugsweise 15 bis 50, insbesondere 20 bis 40 Gew.-%, bezogen auf Pfropf-Copolymerisat, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol als Pfropfauflage C. 1 auf
- β: 30 bis 90, vorzugsweise 50 bis 85, insbesondere 60 bis 80 Gew.-%, bezogen auf Pfropf-Copolymerisat, eines Butadienpolymerisats mit mindestens 50 Gew.-%, bezogen auf β, Butadienresten als Pfropfgrundlage C.2,
wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser d₅₀ des Pfropfpolymerisats C.2 0,05 bis 2 µm, vorzugsweise 0,1 bis 0,6 µm beträgt.

(Meth)-Acrylsäureester α sind Ester der Acrylsäure oder Methacrylsäure und einwertige Alkohole mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropf-(Co)polymerisaten auch solche Produkte verstanden, die durch Polymerisation der Pfropfmonomere in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate sind z.B. auch Pfropfpolymerisate aus
- τ: 20 bis 90 Gew.-%, bezogen auf das Pfropfpolymerisat Acrylatkautschuk mit einer Glasübergangstemperatur <-20°C als Pfropfgrundlage C.2 und
- δ: 10 bis 80 Gew.%, bezogen auf das Pfropfpolymerisat, mindestens eines polymerisierbaren, ethylenisch ungesättigten Monomeren.

Die Acrylatkautschuke τ der Pfropfpolymerisate sind vorzugsweise Polymerisate aus Acrytsäureatkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzten Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage τ sind Emulsionspolymerisate, die einen Gehalt von mindestens 60 Gew.-% aufweisen.

Weitere geeignete Pfropfgrundlagen gemäß C.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage C.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropf-Copolymerisate können nach bekannten Verfahren wie Masse-, Suspension, Emulsions- oder Masse-Suspensionsverfahren hergestellt werden.

Weiterhin sind als thermoplastisches Material für die erfindungsgemäßen Verbunde thermoplastische Polyester geeignet.

Als Polyester können Reaktionsprodukte von aromatischen Dicarbonsäuren oder ihren reaktionsfähigen Derivaten, z.B. Dimethylestern oder Anhydriden und aliphatischen, cycloaliphatischen oder arylaliphatischen Diolen und Mischungen solcher Reaktionsprodukte eingesetzt werden.

Bevorzugte Polyalkylenterephthalate lassen sich aus Terephthalsäuren oder ihren reaktionsfähigen Derivaten und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 mol-%, bezogen auf die Dicarbonsäurekomponente, Terephthalsäurereste und 80 bis 100, vorzugsweise 90 bis 100 mol-%, bezogen auf die Diolkomponente, Ethylenglykol und/oder Butandiol-1,4-Reste. Neben Terephthalsäureestern sind Ester von anderen aromatischen Dicarbonsäuren mit 8 bis 14 C-Atomen oder aliphatischen Dicarbonsäuren mit 4 bis 12 C-Atomen wie Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure oder deren Mischungen geeignet. Neben Ethylenglykol- und/oder Butandiol-1,4 sind andere aliphatische Diole mit 3 bis 12 C-Atomen wie Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1,4-Di(ß-hydroxyethoxyphenyl)-propan, 2,4-Dihydroxy-1,1,3,3-tetramethylcyclobutan, 2,2-Bis-(3-ß-hydroxyethoxyphenyl)-propan und 2,2-Bis-(4-hydroxy-propoxyphenyl)-propan (DE-OS2407647, 2 407 776, 2 715 932) oder deren Mischungen geeignet.

Die Polyester, insbesondere die Polyalkylenterephthalate können durch Einbau relativ kleiner Mengen 3- oder 4-wertiger Alkohole oder 3- oder 4-basiger Carbonsäure, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die aus Terephthalsäure oder deren reaktionsfähigen Derivaten, z.B. deren Dialkylestern und Ethandiol und/oder Butandiol-1,4 (Polyethylenterephthalat, Polybutylenterephthalat) hergestellt werden sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyester besitzen im allgemeinen eine Grenzviskosität von 0,4 bis 1,4 dl/g, vorzugsweise 0,5 bis 1,3 dl/g, insbesondere 0,6 bis 1,2 dl/g, jeweils gemessen in PhenoVo-Dichlorbenzol (1:1 Gew.-T1.) bei 25°C.

Als thermoplastische Polyamide für die erfindungsgemäßen Verbunde können Polyamid 66 (Polyhexamethylenadipinamid) oder Polyamide von cyclischen Lactamen mit 6 bis 12 C-Atomen, bevorzugt von Laurinlactam und besonders bevorzugt ε-Caprolactam = Polyamid 6 (Polycaprolactam) oder Copolyamide mit Hauptbestandteilen 6 oder 66 oder Compounds mit Hauptbestandteil der genannten Polyamide verwendet werden. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Die aktivierte anionische Polymerisation von Lactamen zu Polyamiden wird in technischem Maßstab so durchgeführt, daß man einerseits eine Lösung von Katalysator in

Lactam, gegebenenfalls mit Schlagzähmodifikator, und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise eine konzentrierte Aktivator- sowie Katalysatorschmelze zu einer Lactamschmelze dosieren. Weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Der Katalysator ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne kann N-Acyllactame oder Säurechloride oder, bevorzugt, aliphatische Isocyanate, besonders bevorzugt Oligomere des Hexamethylendüsocyanats sein. Als Aktivator kann sowohl die Reinsubstanz wie auch bevorzugt eine Lösung, beispielsweise in N-Methylpyrrolidon, dienen.

Besonders bevorzugt werden als thermoplastisches Material A Mischungen aus wenigstens
1 bis 99, vorzugsweise 10 bis 90, besonders bevorzugt 20 bis 80 Gew.-Teile wenigstens eines der genannten Polycarbonate,
0 bis 50, vorzugsweise 1 bis 50, besonders bevorzugt 2 bis 30, insbesondere bevorzugt 8 bis 25 Gew.-Teile wenigstens eines der genannten Styrolcopolymerisate
   und
1 bis 99, vorzugsweise 7 bis 80, besonders bevorzugt 10 bis 70 Gew.-Teile eines oder mehrerer der genannten Pfropfpolymerisate, verwendet.

Erfindungsgemäße feinstteilige anorganischen Verbindungen sind beispielsweise TiN, TiO₂, SnO₂,WC, ZnO, Al₂O₃, AlO(OH), ZrO₂, Sb₂O₃, SiO₂, Eisenoxide, NaSO₄, BaSO₄, Vanadiumoxide, Zinkborat, Al-Silikate und Mg-Silikate, sowie Mischungen daraus, wobei die durchschnittlichen Teilchendurchmesser kleiner gleich 200 nm sind, vorzugsweise kleiner gleich 150 nm, insbesondere von 1 bis 100 nm, ganz besonders bevorzugt 1 bis 70 nm.

Ein, zwei, oder dreidimensionale Silikate und dotierte Verbindungen sind ebenfalls verwendbar. Desweiteren können diese nanoskaligen Partikeln mit organischen Molekülen oberflächenmodifiziert sein, um eine bessere Verträglichkeit mit der Matrix zu erzieten. Auf diese Weise lassen sich hydrophobe oder hydrophile organische Oberflächen erzeugen.

Teilchengröße und Teilchendurchmesser bedeutet immer den mittleren Teilchezidurchmesser d₅₀, ermittelt durch Ultrazentrinigenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Solen oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Additiven, Monomeren, Lösungsmitteln oder in Thermoplasten A, die Cofällung von Dispersionen der Komponente A mit Dispersion, Suspensionen, Pasten oder Solen der feinstteiligen anorganischen Materialien dar.

Die erfindungsgemäßen Formmassen können wenigstens eines der üblichen Additive, wie Gleit- und Entformungsmittel, Nukleiermittel, Antistatika, Stabilisatoren sowie Farbstoffe und Pigmente enthalten.

Das anorganische Pulver wird in Mengen von 0,5 bis 50, vorzugsweise 1 bis 25, besonders bevorzugt von 3 bis 15 Gew.-%, bezogen auf das thermoplastische Material A in den Thermoplasten eingearbeitet.

Erfindungsgemäß können thermoplastische, geschäumte oder massive Polyurethanmaterialien oder bevorzugt Formkörper in Sandwichbauweise hergestellt werden.

Die erfindungsgemäß zum Einsatz kommenden Polyurethane bzw. Polyurethanharn-Stoffe bzw. Polyharnstoffe erhält man durch Umsetzung von Polyisocyanaten mit H-aktiven polyfunktionellen Verbindungen, vorzugsweise Polyolen.

Als Polyisocyanate kommen bevorzugt solche in Frage, die aus der Polyurethanchemie bekannt und dort üblicherweise eingesetzt werden. Es handelt sich dabei insbesondere um Polyisocyanate auf aromatischer Basis, z.B. 2,4-Diisocyanatotoluol, dessen technische Gemische mit 2,6-Diisocyanatotoluol, 4,4'-Diisocyanatodiphenylmethan, dessen Gemische mit den entsprechenden 2,4'-und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und den bei der nachstehend beschriebenen Komponente B beispielhaft genannten, einfach Polyolen und/oder Polyetherpolyolen und/oder Polyesterpolyolen andererseits sowie beliebige Gemische derartiger Isocyanate, sofern sie ausreichend lagerstabil sind.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10 000, vorzugsweise 600 bis 8 000 und insbesondere 800 bis 5 000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt.

Geeignete derartige Polyhydroxylverbindungen sind sowohl einfache mehrwertige Alkohole des Molekulargewichtsbereichs 82 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8 000, vorzugsweise 800 bis 4 000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9 Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.-% auf. Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Ferner geeignet sind Polyesterpolyole, wie sie durch Umsetzung niedermolekularer Alkohole mit mehrwertigen Carbonsäuren, wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 280 142 sowie DE-A 2 324 134, 2 423 984, 2 512 385, 2 513 815, 2 550 796, 2 550 797, 2 550 833, 2 550 882, 2 633 293 und 2 639 254 beschrieben. Es ist aber auch möglich, gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 5369 oder Polycarbonatpolyolen (DE-PS 1 769 795; US-A-3 637 909) erhalten werden, sind für die Herstellung von Polyurethanen geeignet. Bei Verwendung von Polyetherpolyolen, welche gemäß DE-A-2 442 101, 2 844 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit.

Vertreter der genannten als H-aktiven Verbindungen zu verwendenden Verbindungen sind z.B. in High Polymers, Vol. XVI, "Polyurethanes Chemistry and Technology", verfaßt von Saunders-Frisch, Interscience Publishers, New York, London, Band 1, 1982, Seiten 32 bis 42 und Seiten 44 bis 54 und Band II, 1984, Seiten 5 bis 6 und 198 bis 199, sowie im Kunststoff-Handbuch, Band VII, Carl Hanser Verlag, München, 1983, z.B. auf den Seiten 45 bis 61, beschrieben.

Selbstverständlich können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflußmöglichkeiten auf die polymer-physikalischen Eigenschaften des Polyurethans bekannt, so daß NCO-Komponente, aliphatische Diole und Polyole in günstiger Weise aufeinander abgestimmt werden können.

Es können alle an sich bekannten Hilfs- und Zusatzstoffe wie z.B. Trennmittel, Treibmittel, Füllstoffe, Katalysatoren und Flammschutzmittel eingesetzt werden.

Für den Fall, daß geschäumte Materialien hergestellt werden sollen, kann in an sich bekannter Weise das Reaktionsgemisch in eine Form eingetragen werden. In der Form schäumt das schäumfahige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß der Formkörper eine kompakte Haut und einen zelligen Kern aufweist (Integralschaumstoffe). Polyurethanschaumstoffe können auch als Block-Schaumstoff hergestellt werden.

Bevorzugt wird auch die Herstellung von Polyurethan-Verbundkörpern in Sandwichbauweise. Das Verfahren kann dabei sowohl als Depot- oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

Thermoplastische Polyurethane gemäß vorliegender Erfindung sind Reaktionsprodukte aus Diisocyanaten, ganz oder überwiegend aliphatischen Oligo- und/oder Polyestern und/oder -ethern, sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburh, PA) hergestellt werden.

Ausgangsmaterialien zur Herstellung von Oligoester und Polyester sind beispielsweise Adipinsäure, Bernsteinsäure, Suberinsäure, Sebacinsäure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo- oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt von ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermo-plastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane gemäß Komponente B sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewichte n (Zahlenmittel, ermittelt über die OH-Zahl der Produkte) von 600 bis 2 000, vorzugsweise von 1 000 bis 2 000 haben.

Als organisches Diisocyanat wird zur Herstellung der Polyurethane gemäß Komponente B vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von ca. 0,005 bis 0,2 % liegt. Die Acidität, gerechnet als HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane gemäß Komponente B verwendet werden, beispielsweise die Diisocyanate des Etnylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, des 2,2-Diphenylpropan-4,4'-diisocyanat, das Azobenzol-4,4'-diiso-cyanat, des Diphenylsulfon-4,4'-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylmethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-ß-hydroxy-ethylether, 1,3-Phenylen-bis-ß-hydroxyethylether, Bis-(hydroxymethyl-cyclohexan), Hexandiol, Adipinsäure, -Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Dimethyl-propanolamin, 3-Aminocyclohexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentraerythrit und Triethanolamin.

Monofunktionelle Komponenten, beispielsweise Butanol, können auch zur Herstellung der thermoplastischen Polyurethane gemäß Komponente B eingesetzt werden.

Die als Bausteine für die thermoplastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der Polyurethane kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220°C erhitzt und dann vermischt werden. Vorzugsweise werden die Oligo bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine,die in dem US-Patent 2 729 618 genannt werden, zur Anwendung kommen.

### Beispiele

### A1

Lineares Polycarbonat auf Basis Bisphenol A mit einer relativen Lösungsviskosität von 1,252 gemessen in CH₂Cl₂ als Lösungsmittel bei 25°C und einer Konzentration von 0,5 g/100 ml.

### A2

Styrol-Acrylnitril-Copolymerisat mit einem Styrol-Acrylnitril-Verhältnis von 72:28 und einer MFR (melt flow rate) von 12,5 g/10 min gemessen bei 23,0°C und einem Gewicht von 3,8 kg.

### A3

Pfropfpolymerisat von 40 Gew.-Teilen eines Copolymerisats aus Styrol und Acrylnitril im Verhältnis 73:27 auf 60 Gew.-Teile eines teilchenförmigen vernetzten Polybutadienkautschuks (mittlere Teilchengröße d₅₀ = 0,3 µm), hergestellt durch Emulsionspolymerisation.

AlO (OH) als polare Verbindung, (Pural 200 der Fa. Condea, Hamburg);
PETS (Pentaerythrittetrastearat) als Entformungsmittel;
Potyurethan-Schaumsystem: Bayfill 51 IF 02 P der Firma Bayer AG Leverkusen, Deutschland.

### Herstellung und Prüfung der erfindungsgemäßen Verbunde

Das Mischen der Komponenten A1, A2, A3, PETS und gegebenenfalls AlO (OH) erfolgt auf einem 3-1-Innenkneter bei Temperaturen von 220 bis 240°C. Von dieser Mischung werden auf einer Spritzgießmaschine vom Typ Arburg 270 E bei einer Massetemperatur von 260°C Formkörper (Platten) der Abmessung 150 x 105 x 3,2 mm hergestellt, die anschließend mit einem handelsüblichen Polyurethan-Schaumsystem vom Typ Bayfill 51IF02P in bekannter Weise beschichtet werden. Nach Beendigung der Verschäumungsreaktion wird mit den Verbundplatten der nachstehend beschriebene Klimawechseltest durchgeführt.

### Klimawechseltest

Zur Beurteilung der Verbundhaftung wird ein Klimawechseltest durchgeführt, bei dem die Verbunde mit einer Temperaturänderungsgeschwindigkeit von 1 K/min Temperaturen von -40°C bis +80°C ausgesetzt werden. Dabei wird eine Beharrungsdauer bei den jeweiligen genannten Grenztemperaturen von 4 Stunden und eine relative Luftfeuchtigkeit von 80 % bei T = +80°C eingehalten. Nach 12 Temperaturzyklen wird die Verbundhaftung zwischen dem thermoplastischen Material und dem PU-Material gemessen, indem solange eine Krafteinwirkung erfolgt, bis der Verbund reißt. Reißt der Verbund im PU-Material ein, wird die Verbundhaftung mit (+) bewertet. Separieren sich die Verbundmaterialien, bevor das PU-Material einreißt, wird die Verbundhaftung mit (-) bewertet.

**Tabelle 1**

| Beispiel | A (Vergleich) | 1 | 2 |
|---|---|---|---|
| Thermoplast-Mischung [Gew.-Teile] | | | |
| A1 | 58 | 55,2 | 52,7 |
| A2 | 24 | 22,9 | 21,8 |
| A3 | 18 | 17,1 | 16,4 |
| AIO (OH) | - | 4,8 | 9,1 |
| PETS | 0,75 | 0,75 | 0,75 |
| PU-Schaumsystem 51IF02P | x | x | x |
| Dicke des PU-Schaums (mm) | 5 | 5 | 5 |
| Verbundhaftung im Klimawechseltest | (-) | (+) | (+) |

Wie die Versuche gemäß Tabelle 1 zeigen, zeichnen sich die erfindungsgemäßen Verbunde durch eine ausgezeichnete Verbundhaftung aus.

## Patentansprüche

1. **Verbunde** aus wenigstens zwei unterschiedlichen unmittelbar miteinander verbundenen Kunststoffimaterialien, wobei
A) ein thermoplastisches Polymer oder eine thermoplastische Mischung von Polymeren ist, die wenigstens eine anorganische Verbindung TiN, TiO₂, SnO₂, WC, ZnO, Al₂O₃, AlO(OH), ZrO₂, Sb₂O₃, SlO₂, Eisenoxide, Na₂SO₄ BaSO₄, Vanadiumoxide, Zinkborat, Al-Silikat, Mg-Silikat oder Mischungen davon als feinstverteilte anorganische Verbindung mit einem durchschnittlichen Teilchendurchmesser kleiner gleich 200 nm enthalten und
B) Polyurethan ist.

2. Verbunde nach Anspruch 1, wobei Komponente A ausgewählt ist ans mindestens einem der folgenden Polymere:
Polycarbonat, Polyestercarbonat, Polyester, Styrol-Copolymerisat, Pfropfpolymerisat, Polyamid**.**

3. Verbunde nach einem der Ansprüche 1 bis 2, wobei der Anteil der polaren Verbindung 0,5 bis 50 Gew.-Teile, bezogen auf das thermoplastische Material A, beträgt.

4. Verbunde gemäß Anspruch 1, wobei das thermoplastische Polymer A) Additive ausgewählt aus mindestens einem der Zusätze Gleit- und Entformunsgsmittel, Nukleiermittel, Antistatika, Stabilisatoren und Pigmenten enthält.

5. Verbunde nach einem der Ansprüche 1 bis 4, wöbei das Polyurethan als Schaum, Lack oder als massives Material vorliegt.

6. Formkörper hergestellt aus Verbunden nach einem der Ansprüche 1 bis 5.

7. Verfahren zur Herstellung von Verbunden nach einem der Ansprüche 1 bis, 5, wobei man in die Komponente A die anorganische Verbindung durch direktes Kneten oder Extrudieren der Bestandteile der Formmasse und den feinstteiligen anorganischen Pulvern oder durch die Herstellung eines Masterbatches oder die Cofällung von Dispersionen der Komponente A mit Dispersionen, Suspensionen, Pasten oder Solen der feinstteiligen anorganischen Materialien feinstverteilt einbringt und auf dieses Material ohne Aufbringung einer Haftvermittlerschicht das PUR-System aufträgt und ausreagieren läßt.

## Claims

1. Composites made of at least two different plastics materials directly bonded to one another, where
A) is a thermoplastic polymer or a thermoplastic mixture of polymers which comprise at least one inorganic compound TiN, TiO₂, SnO₂, WC, ZnO, Al₂O₃, AlO(OH), ZrO₂, Sb₂O₃, SiO₂, iron oxides, Na₂SO₄, BaSO₄, vanadium oxides, zinc borate, Al silicate, Mg silicate or a mixture thereof as very finely dispersed inorganic compound with average particle diameter smaller than or equal to 200 nm and
B) is polyurethane.

2. Composites according to Claim 1, where component A has been selected from at least one of the following polymers,
polycarbonate, polyester carbonate, polyester, styrene copolymer, graft polymer, polyamide.

3. Composites according to any of Claims 1 to 2, where the proportion of the polar compound is from 0.5 to 50 parts by weight, based on the thermoplastic material A.

4. Composites according to Claim 1, where the thermoplastic polymer A) comprises additives selected from at least one of the following additions: lubricants and mould-release agents, nucleating agents, antistatic agents, stabilizers and pigments.

5. Composites according to any of Claims 1 to 4, where the polyurethane takes the form of foam or coating or of bulk material.

6. Moulding produced from composites according to any of Claims 1 to 5.

7. Process for producing composites according to any of Claims 1 to 5, where the inorganic compound is introduced in very fine-particle form into component A by direct kneading or extrusion of the constituents of the moulding composition and the very fine-particle inorganic powders or by producing a masterbatch or the coprecipitation of dispersions of component A with dispersions, suspensions, pastes or sols of the very fine-particle inorganic materials, and the PU system is applied to this material without applying any adhesion-promoter layer, and the reaction is allowed to proceed to completion.

## Revendications

1. Composites à base d'au moins deux matériaux en matière plastique différents liés directement l'un à l'autre,
A) étant un polymère thermoplastique ou un mélange thermoplastique de polymères, qui contiennent au moins un composé inorganique TiN, TiO₂, SnO₂, WC, ZnO, Al₂O₃, AlO(OH), ZrO₂, Sb₂O₃, SiO₂, oxydes de fer, Na₂SO₄, BaSO₄, oxydes de vanadium, borate de zinc, silicate d'Al, silicate de Mg ou des mélanges de ceux-ci sous forme de composé inorganique très finement divisé ayant un diamètre moyen de particule inférieur ou égal à 200 nm et
B) étant un polyuréthane.

2. Composites selon la revendication 1, dans lesquels le composant A est choisi parmi au moins l'un des polymères suivantes :
polycarbonate, polyestercarbonate, polyester, copolymère de styrène, polymérisat greffé, polyamide.

3. Composites selon la revendication 1 ou 2, dans lesquels la concentration du composé polaire vaut de 0,5 à 50 parties en poids, par rapport au matériau thermoplastique A.

4. Composites selon la revendication 1, dans lesquels le polymère thermoplastique A) contient des additifs choisis parmi au moins l'un des additifs lubrifiants et agents de démoulage, agents de nucléation, agents antistatiques, stabilisants et pigments.

5. Composites selon l'une quelconque des revendications 1 à 4, dans lesquels le polyuréthane est présent sous forme de mousse, de laque ou de matériau massif.

6. Corps moulés produits à partir de composites selon l'une quelconque des revendications 1 à 5.

7. Procédé pour la production de composites selon l'une quelconque des revendications 1 à 5, dans lequel on introduit très finement divisé dans le composant A le composé inorganique par malaxage direct ou extrusion directe des constituants de la matière à mouler et les poudres inorganiques très finement divisées ou via la préparation d'un mélange-maître ou la co-précipitation de dispersions du composant A avec des dispersions, suspensions, pâtes ou sols des matériaux inorganiques très finement divisés et on applique le système PUR sur ce matériau sans application d'une couche de promoteur d'adhérence et on laisse réagir complètement.
